# EUROPEAN PATENT APPLICATION

(11) **EP 2 484 580 A2**
(43) Date of publication of application: **08.08.2012**
(21) Application number: 12153121.4
(22) Date of filing: 30.01.2012
(51) Int. Cl.: B62D 33/067, B62D 33/07, B60R 21/13

(54) **Working vehicle comprising a vehicle frame and an operator cab with isolation and roll over protection**

(30) Priority: 04.02.2011 US 201113021165
(71) Applicant: Deere & Company, Moline, IL 61265-8098 (US)
(72) Inventor: Dressler, Robert P, Lancaster, WI Wisconsin 53813-2119 (US); Nedved, Jaime M, Dubuque, IA Iowa 52002 (US); Merten, James G, Peosta, IA Iowa 52068-9437 (US); Klein, Daniel R, Asbury, IA Iowa 52002 (US); Kennedy, Alana J, Peosta, IA Iowa 52068 (US)
(74) Representative: Dehnhardt, Florian Christopher

(57) **Abstract**

A working vehicle comprises a vehicle frame (10) and an operator cab (20). The operator cab (20) is attached to the vehicle frame (10) via at least one cab support assembly (100) capable of flexibly mounting the operator cab (20) to the vehicle frame (10) in an operating adjustment and pivotally connecting the operator cab (20) to the vehicle frame (10) in a servicing adjustment, wherein the operating adjustment providing cab isolation and roll over protection during vehicle operation and the servicing adjustment providing service access to working components of the working vehicle.

## Description

The present invention relates to a working vehicle comprising a vehicle frame and an operator cab.

Operator cabs for working vehicles are often mounted over working components such as engines, transmissions, etc., which usually generate noise and vibration. Thus, in order to reduce the noise and vibration experience of operators, operator cabs are, at times, mounted to a supporting vehicle frame via flexible connections designed to absorb vibrations and to, thereby, reduce noise inside the cab. These cabs must have motion limiting devices as part of the roll over protection structure (ROPS) to restrict cab motion empowered by the flexible connections as unexpected loads may enable cab motion to greater distances than acceptable. Further, such operator cab must be somehow removable with respect to the supporting vehicle frame in order to allow room to effect the inevitable servicing of the working components over which the cab is normally positioned. Traditionally, such cabs are removed from the service area via rotation toward the front, the rear, or either side of the working vehicle using a corresponding hinge at the axis of rotation (see, for example, US 7 607 721 B2) or completely removed, via lift-off, from the vehicle frame (see, for example, US 2010/017662 A1) but these traditional solutions tend to be complex and/or inefficient when flexible connections are used due to their nature and structure.

Accordingly, there is need for an improved service access to the working components in a working vehicle having a operator cab mounted to a vehicle frame.

This object is achieved by the present invention providing a working vehicle which comprises a vehicle frame and an operator cab. The operator cab is attached to the vehicle frame via at least one cab support assembly capable of flexibly mounting the operator cab to the vehicle frame in an operating adjustment and pivotally connecting the operator cab to the vehicle frame in a servicing adjustment, wherein the operating adjustment providing cab isolation and roll over protection during vehicle operation and the servicing adjustment providing service access to working components of the working vehicle.

For a complete understanding of the objects, techniques, and structure of the invention reference should be made to the following detailed description and accompanying drawings, wherein identical components or such which are similar in function are designated by identical reference numerals:
- Fig. 1: is a side view of a vehicle frame for a working vehicle having an operator cab releasably mounted to the vehicle frame via of a front mounting assembly and a rear mounting assembly,
- Fig. 2: is an enlarged view of the front mounting assembly,
- Fig. 3: is an enlarged view of the rear mounting assembly,
- Fig. 4: is a side view of a cab support pin,
- Fig. 5: is a perspective view of the cab support pin of Fig. 4,
- Fig. 6: is an enlarged view of the rear mounting assembly of Fig. 3,
- Fig. 7: is a perspective view of a cab attachment bracket,
- Fig. 8: is a side view of the cab attachment bracket of Fig. 7,
- Fig. 9: is an enlarged view of a motion limiting bracket,
- Fig. 10: is a side view of the cab attachment bracket of Fig. 8, the motion limiting bracket of Fig. 9 and the cab support pin of Fig. 5 after assembly,
- Fig. 11: is a perspective view of of the rear mounting assembly of Fig. 6 after the operator cab is rotated,
- Fig. 12: is a side view of the operator cab and the rear mounting assembly when the rear mounting assembly is adjusted for vehicle operation, and
- Fig. 13: is a side view of the operator cab and the rear mounting assembly when the rear mounting assembly is adjusted for service purposes.

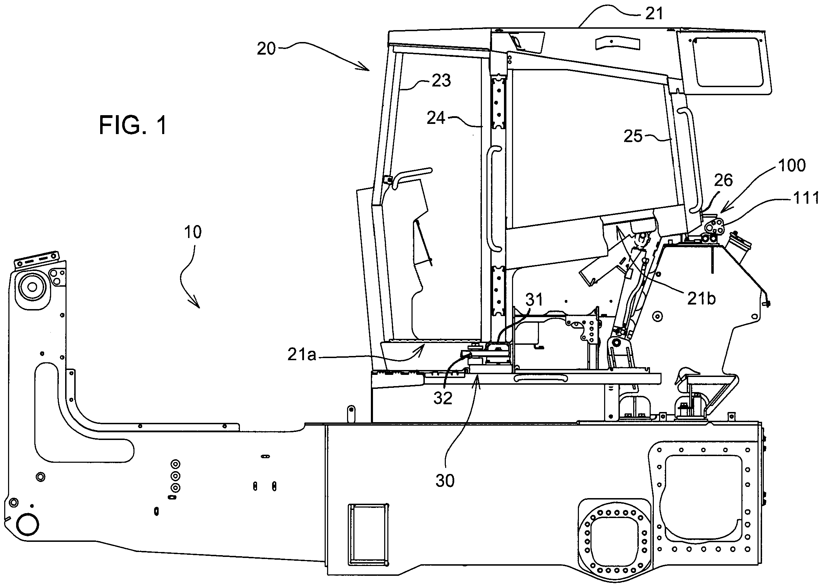

Fig. 1 illustrates an exemplary embodiment of a vehicle frame 10 being part of a working vehicle such as, for example, a dozer (not shown) having ground engaging tracks (not shown) and an operator cab 20. Underneath the operator cab 20, and attached to the vehicle frame 10 may be other conventional working components (not shown) of the working vehicle which generate noise and vibration. For attaching the operator cab 20 to the vehicle frame 10, front cab support assemblies 30 and rear cab support assemblies 100 are provided on the left and right sides of the operator cab 20. The front and rear cab support assemblies 30 and 100 will be described for only one side of the vehicle frame 10 as, in this exemplary embodiment, they may be identically reflected on the other side of the vehicle frame 10.

The operator cab 20 includes a roof 21, two front support posts 23 (alternatively called A posts), two side support posts 24 (alternatively called B posts), two rear support posts 25 (alternatively called C posts), and a rear cab panel 26. The operator cab 20 has a lower portion 21 a toward the front of the operator cab 20 and a higher portion 21 b toward the rear of the operator cab 20.

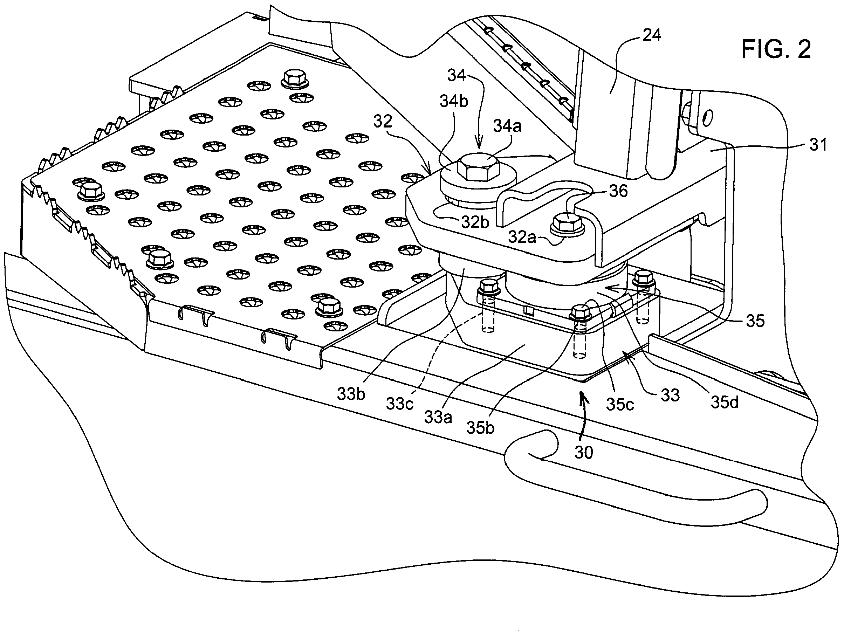

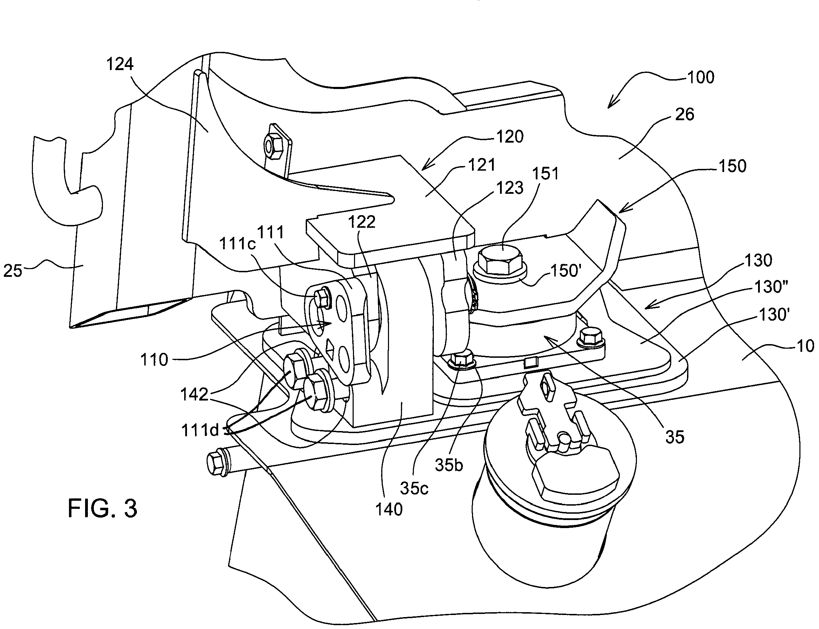

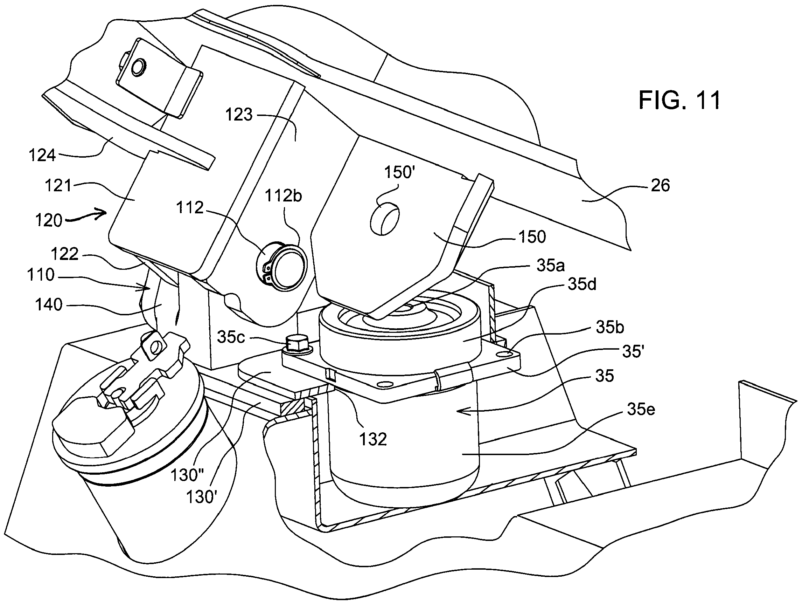

As illustrated in Fig. 2, in this exemplary embodiment, the operator cab 20 is supported at side support post 24 via front cab support assembly 30 which includes a channel shaped front support bar 31 spanning the width of the operator cab 20 between the two side support posts 24. A front support plate 32 is welded to an end of the channel shaped front support bar 31 and having an anchor hole 32a and a clearance hole 32b. A front mounting pad 33 is welded to the vehicle frame 10 and including threaded holes (not shown), a lower mounting pad support area 33a, an elevated mounting pad support area 33b, a damper anchor hole 132 (see Fig. 11) and a threaded motion limiter attachment hole (not shown). A motion limiter bolt assembly 34 includes a motion limiter bolt 34a having a diameter less than the diameter of the clearance hole 32b and a motion limiter washer 34b welded thereto and having a diameter greater than the diameter of the clearance hole 32b. A conventional viscous damper 35 having a threaded suspension anchor hole 35a (see Fig. 11), a damper attachment bracket 35' with damper attachment holes 35b (see also Figs. 3 and 11), damper attachment bolts 35c, and a suspension anchor bolt 36.

As illustrated in Fig. 2, in this exemplary embodiment, the damper attachment bolts 35c connect the viscous damper 35 to the front mounting pad 33 and, thereby, to the vehicle frame 10 via the threaded holes 33c. The suspension anchor bolt 36 connects the front support plate 32 and, thereby, the front support bar 31, to the viscous damper 35 via the threaded suspension anchor hole 35a (see Fig. 11), establishing a flexible and damped suspension for the operator cab 20 at the side support post 24.

As illustrated in Fig. 2, the motion limiter bolt 34a extends through the clearance hole 32b and is secured to the elevated mounting pad support area 33b by threaded attachment via threaded motion limiter attachment hole. The distance provided between the front support plate 32 and the motion limiter washer 34b, when the front support plate 32 is resting atop of the elevated mounting pad support area 33b, provides a limited area in which the front support plate 32, and thus, the operator cab 20, may vertically move with respect to the vehicle frame 10, the motion limiter bolt assembly 34 and the elevated mounting pad support area 33b restricting further vertical movement as the motion limiter washer 34b and the elevated mounting pad support area 33b are of greater diameter than the clearance hole 32b.

A first portion 35d of the viscous damper 35 extends above the damper attachment bracket 35'. A second portion 35e of the viscous damper 35 extends below the damper attachment bracket 35' and through the damper anchor hole 132 (see Fig. 11).

As illustrated in Fig. 3, the operator cab 20 is supported near rear support post 25 via rear cab support assembly 100, including a cab support pin 110, a cab attachment bracket 120, and a rear mounting pad 130 welded to the vehicle frame 10 over a fuel tank (not shown). The rear mounting pad 130 has a lower rear mounting pad portion 130' and an elevated rear mounting pad portion 130". A motion limiting bracket 140 is welded to the rear mounting pad 130. A rear support plate 150 is welded to the rear cab panel 26 and the cab attachment bracket 120, the rear support plate 150 including a rear anchor hole 150' (see Fig. 11). A further conventional viscous damper 35 also has a threaded suspension anchor hole 35a and damper attachment bracket 35' with damper attachment holes 35b, rear suspension anchor bolt 151, and damper attachment bolts 35c.

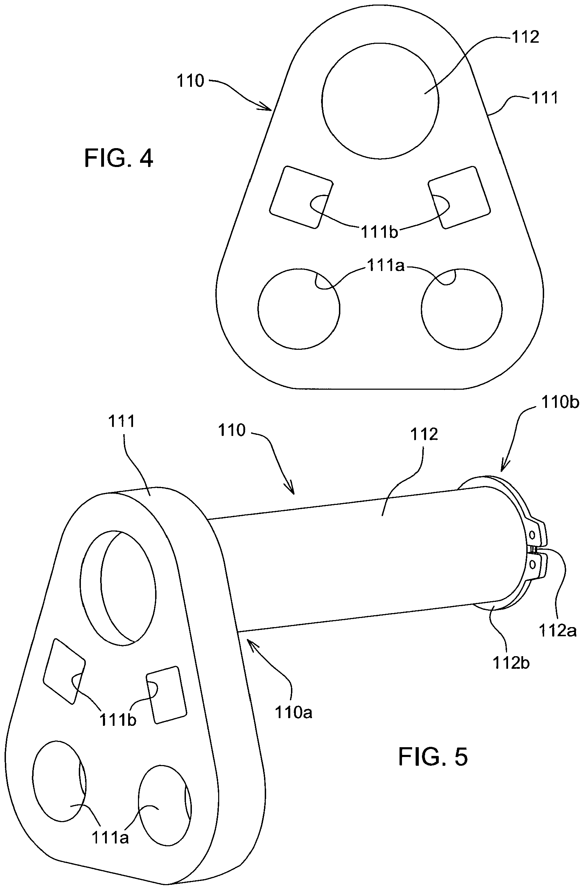

As illustrated in Figs. 4 and 5, the cab support pin 110 includes a flag 111 at a first end 110a of the cab support pin 110 and a shank 112 having a groove 112a, the groove 112a positioned near a second end 110b of the cab support pin 110. The flag 111 includes dual cab support holes 111 a and dual anchor holes 111 b. Dual anchor holes 111 b exist to allow cab support pin 110 to be similarly located angularly regardless of the side of the vehicle frame 10 on which it is placed.

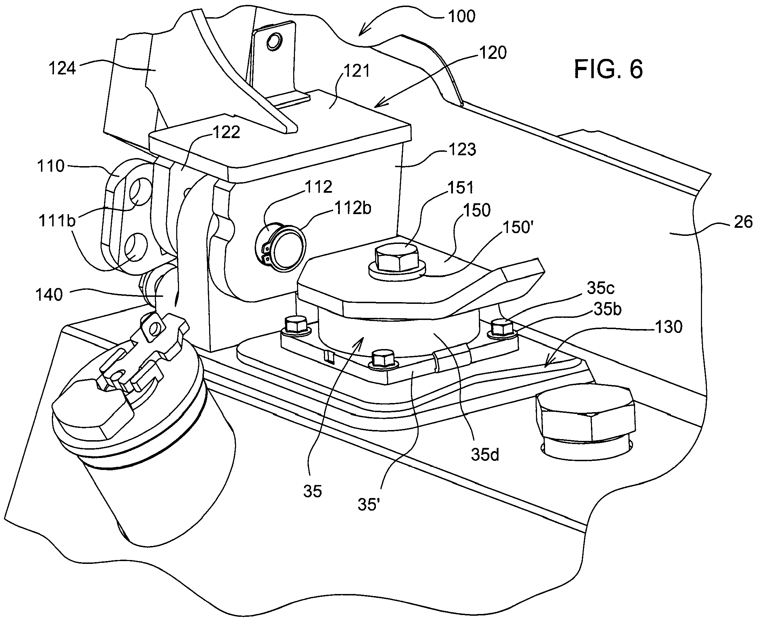

As shown in Fig. 6, in this exemplary embodiment the damper attachment bolts 35c connect the viscous damper 35 to the rear mounting pad 130 and, thereby, to the vehicle frame 10 via the damper attachment holes 35b and threaded holes (not shown) in the rear mounting pad 130. As illustrated, the first portion 35d of the viscous damper 35 extends above the damper attachment bracket 35'. The second portion 35e of the viscous damper 35 extends below the damper attachment bracket 35' and through the damper anchor hole 132 (see Fig. 11).

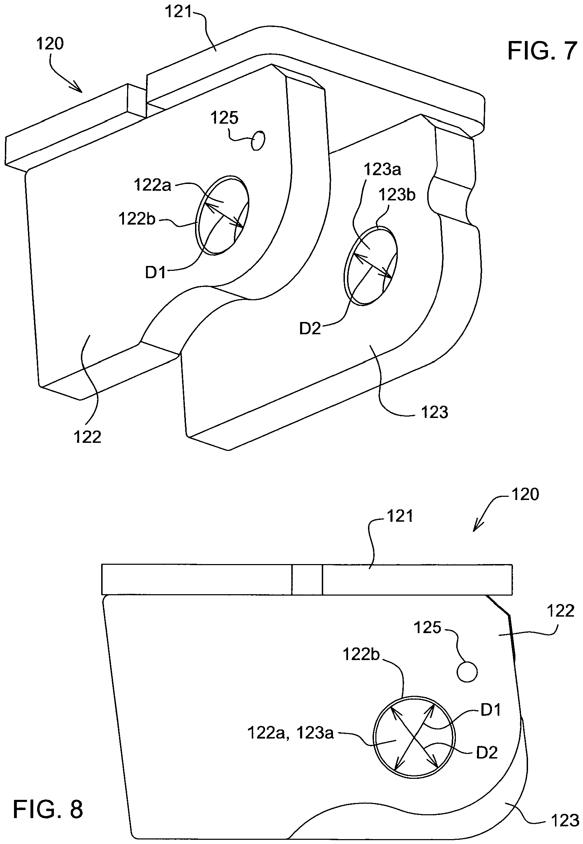

As shown in Figs. 7 and 8, in this exemplary embodiment the cab attachment bracket 120 includes an upper plate 121, a first side plate 122, and a second side plate 123. The first side plate 122 is positioned closer to the rear support post 25 than the second side plate 123. The upper plate 121, the first side plate 122, and the second side plate 123 are welded together as illustrated. The cab attachment bracket 120 is welded to the rear cab panel 26 as illustrated in Figs. 3, 6 and 11. A bracket brace 124 is welded to the upper plate 121, the first side plate 122, and the rear support post 25 for additional structural support for the cab attachment bracket 120. As shown in Fig. 8, the first and second side plates 122 and 123 include substantially coaxial first and second cylindrical holes 122a and 123a having substantially equal diameters D1 and D2, and including first and second chamfers 122b and 123b for ease of pin insertion. The first side plate 122 also includes a threaded flag attachment hole 125 for the flag 111 of the cab support pin 110.

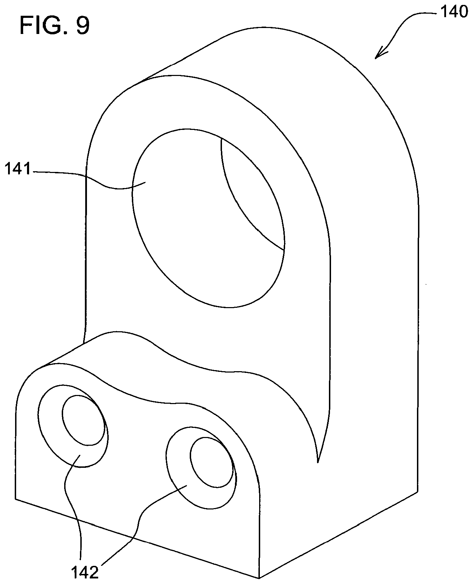

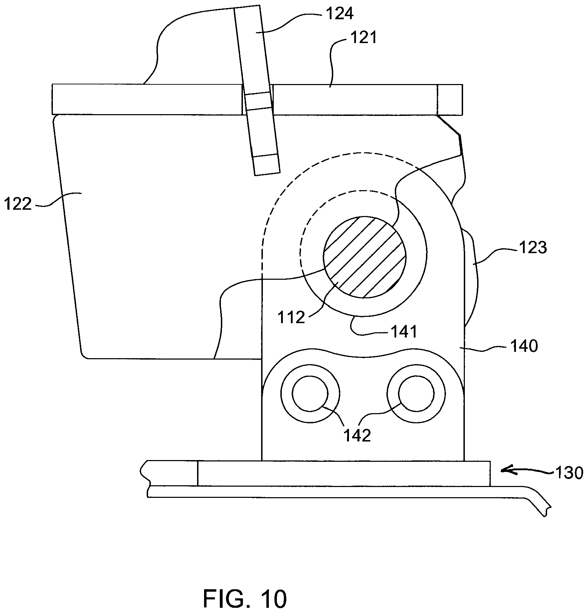

As shown in Figs. 3, 9 and 10, the motion limiting bracket 140 is, in this particular embodiment, welded to the rear mounting pad 130, and includes a clearance hole 141 and threaded flag support holes 142. The clearance hole 141 is sized to allow a desired amount of vertical, horizontal, and rotational movement for the shank 112 when the operator cab 20 is supported by the viscous damper 35 during vehicle operation. As shown in Figs. 3, 6 and 11, the rear support plate 150 may be welded to the second side plate of the cab attachment bracket 120 and the rear cab panel 26. The rear suspension anchor bolt 151 connects the viscous damper 35 to the rear support plate 150 and, thereby, to the motion limiting bracket 140 via the threaded suspension anchor hole 35a.

As indicated in Figs. 3 and 6, the shank 112 of cab support pin 110 extends through the first cylindrical hole 122a of the cab attachment bracket 120, the clearance hole 141 of the motion limiting bracket 140 and the second cylindrical hole 123a of the cab attachment bracket 120. A snap ring 112b fits into groove 112a (see Fig. 5) to hold the shank 112 in place longitudinally.

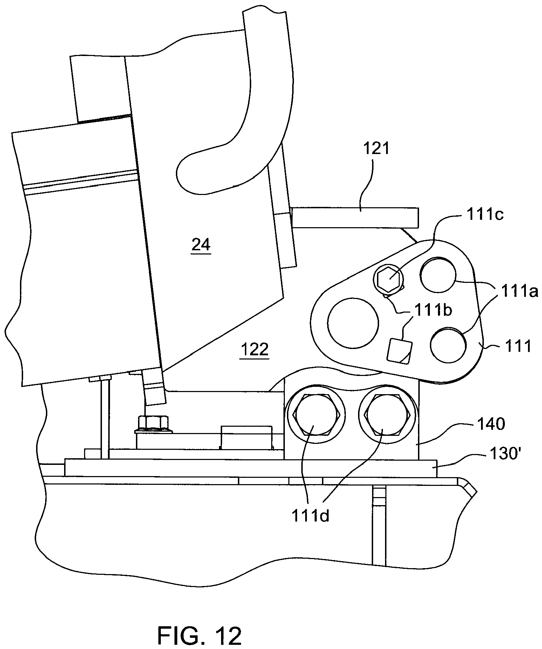

As shown in Figs. 3 and 12, when the operator cab 20 is suspended, i.e., when the rear support plate 150 is supported by the viscous damper 35, the flag 111 of the cab support pin 110 is connected to the cab attachment bracket 120 via a flag anchor bolt 111 c. Thus, the cab support pin 110 may float with respect to the motion limiting bracket 140 but is fixed with respect to the cab attachment bracket 120.

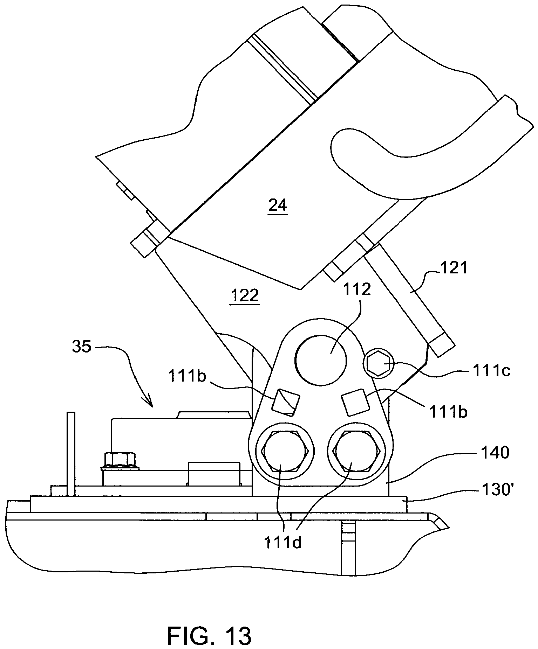

To accomplish cab rotation according to a servicing adjustment, cab support screws 111 d are removed from the threaded flag support holes 142, the flag anchor bolt 111 c is removed from the threaded flag attachment hole 125 and the cab support pin 110 is rotated to align the dual cab support holes 111 a with the threaded flag support holes 142 as shown in Fig. 13. The cab support screws 111 d are then fitted through the dual cab support holes 111 a and screwed into the threaded flag support holes 142. Finally, rear suspension anchor bolt 151 is removed from the threaded suspension anchor hole 35a and the rear anchor hole 150' and the operator cab 20 is rotated to the service position and held in place with the aid of a hydraulic cylinder (not shown), whereupon flag anchor bolt 111 c is re-screwed into the threaded flag attachment hole 125.

To return the operator cab 20 to suspension for vehicle operation according to an operating adjustment, the flag anchor bolt 111 c is removed and the operator cab 20 is rotated from the service position to the operating position shown in Fig. 12. The suspension anchor bolt 36 is then fitted through the rear anchor hole 150' and screwed into the threaded suspension anchor hole 35a. The cab support screws 111 d are then removed, the flag 111 is rotated to align the appropriate flag anchor hole 111 b with the threaded flag attachment hole 125 and the flag anchor bolt 111 c is fitted through the flag anchor hole 111 b and screwed into the threaded flag attachment hole 125 to attach the flag 111 of the cab support pin 110 to first side plate 122 of the cab attachment bracket 120. Finally, the cab support screws 111 d are re-screwed into the threaded flag support holes 142. Figs. 12 and 13 illustrate views of the operator cab 20 and the cab support pin 110 when the operator cab 20 is in the suspended position and the service position, respectively.

In other words, the cab support pin 110 serves as a motion limiting device for roll over protection in the operating adjustment and as part of a pivotal connection in the servicing adjustment.

## Claims

1. A working vehicle comprising a vehicle frame (10) and an operator cab (20), the operator cab (20) being attached to the vehicle frame (10) via at least one cab support assembly (100) capable of flexibly mounting the operator cab (20) to the vehicle frame (10) in an operating adjustment and pivotally connecting the operator cab (20) to the vehicle frame (10) in a servicing adjustment, wherein the operating adjustment providing cab isolation and roll over protection during vehicle operation and the servicing adjustment providing service access to working components of the working vehicle.

2. The working vehicle according to claim 1, **characterized in that** the cab support assembly (100) having a viscous damper (35) for flexibly mounting the operator cab (20) in the operating adjustment.

3. The working vehicle according to claim 1 or 2, **characterized in that** the cab support assembly (100) having a cab support pin (110) which serves as a motion limiting device for roll over protection in the operating adjustment and as part of a pivotal connection in the servicing adjustment.

4. The working vehicle according to one of claims 1 to 3, **characterized in that** the cab support pin (110) may float in the operating adjustment with respect to a motion limiting bracket (140) connected to the vehicle frame (10) but is fixed with respect to a cab attachment bracket (120) connected to the operator cab (20).
